(19) Europäisches Patentamt
European Patent Office
Office européen des brevets

(11) **EP 3 859 470 B1**

(12) **EUROPÄISCHE PATENTSCHRIFT**

(45) Veröffentlichungstag und Bekanntmachung des Hinweises auf die Patenterteilung:
**23.07.2025  Patentblatt 2025/30**

(21) Anmeldenummer: **20154955.7**

(22) Anmeldetag: **31.01.2020**

(51) Internationale Patentklassifikation (IPC):
**G05B 19/418** (2006.01)    **G06N 10/00** (2022.01)

(52) Gemeinsame Patentklassifikation (CPC):
**G05B 19/41805; G05B 19/4183; G06N 10/60;
Y02P 90/02**

(54) **VERFAHREN UND STEUERUNGSEINHEIT ZUR STEUERUNG DER FERTIGUNG EINES PRODUKTS**

METHOD AND CONTROL UNIT FOR CONTROLLING THE MANUFACTURE OF A PRODUCT

PROCÉDÉ ET UNITÉ DE COMMANDE PERMETTANT DE COMMANDER LA PRODUCTION D'UN PRODUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.08.2021  Patentblatt 2021/31**

(73) Patentinhaber: **Deutsche Telekom AG**
**53113 Bonn (DE)**

(72) Erfinder: **Geitz, Marc**
**58089 Hagen (DE)**

(74) Vertreter: **Braun-Dullaeus Pannen Emmerling Patent- & Rechtsanwaltspartnerschaft mbB
Platz der Ideen 2
40476 Düsseldorf (DE)**

(56) Entgegenhaltungen:
**DE-A1- 102016 121 092**

• **ANONYMOUS: "Quantum annealing - Wikipedia", 16 December 2019 (2019-12-16), XP055700706, Retrieved from the Internet <URL:https://en.wikipedia.org/w/index.php?title=Quantum_annealing&oldid=930990210> [retrieved on 20200623]**

# EP 3 859 470 B1

**Beschreibung**

Die vorliegende Erfindung betrifft ein Verfahren zur Steuerung der Fertigung eines Produkts nach Anspruch 1 und eine Steuerungseinheit zur Steuerung der Fertigung eines Produkts nach Anspruch 10.

Verteilte Produktionsprozesse werden typischerweise auf Grundlage eines statistischen Qualitätsmanagements durchgeführt, wobei beispielsweise die SixSigma-Methode zur Prozessverbesserung verwendet wird. Hierbei werden sehr hohe Anforderungen an die Präzision der einzelnen Komponenten gestellt, sodass die entsprechenden Produktionsprozesse ebenfalls einer hohen Präzisionsanforderung unterliegen. Bei der SixSigma-Methode entspricht die Breite des Toleranzbereiches für ein Merkmal einer Komponente beispielsweise einer Streubreite mit einer Standardabweichung von etwa sechs. Legt man eine derartige Streubreite zugrunde, spricht man auch von einer Nullfehlerproduktion. Werden bei der Fertigung von Produkten die einzelnen komplementären Komponenten zufällig, respektive auswahlfrei, miteinander kombiniert, liegen in der Zuliefererkette erhebliche Qualitätsanforderungen vor. Dies liegt insbesondere daran, dass sich die Qualität des Produkts unter Zugrundelegung einer statistischen Prozesskontrolle, wie insbesondere der SixSigma-Methode, gemäß der Gaußschen Fehlerfortpflanzung verschlechtert. Die Fehlerfortpflanzung bedingt hohe Anforderungen an eine geringe Streuung der Merkmale der komplementären Komponenten, mithin eine geringe Variation. Die Fertigungstoleranzen bei den Produktionsprozessen der komplementären Komponenten müssen entsprechend gering sein.

Durch eine gezielte Kombination von komplementären Komponenten wird hingegen ermöglicht, dass die Variation der Merkmale der komplementären Komponenten größer sein kann, beziehungsweise die Fertigungstoleranzen bei den Produktionsprozessen höher sein können. Hierfür ist es erforderlich die Merkmale der unabhängig voneinander produzierten komplementären Komponenten durch Messprozesse für jede Komponente zu bestimmen und der jeweiligen Komponenten zuzuordnen. Beispielsweise wird die Länge einer Komponente gemessen und in Zuordnung zu einem Identifikator dieser Komponente in einem Speichermittel abgespeichert. Auf Grundlage der gemessenen Merkmale lassen sich die komplementären Komponenten in einem Kombinationsschritt gezielt kombinieren, sodass eine ausgewählte Kombination der Komponenten ein Produkt bildet, dass die erforderliche Qualität aufweist. Anstatt alle komplementären Komponenten eines Produkts so genau wie möglich zu produzieren, lässt die gezielte Auswahl von Kombinationen eine erhöhte Varianz bei der Produktion der Komponenten zu. Auf diese Weise können die einzelnen Komponenten qualitativ schlechter, dafür aber deutlich günstiger produziert werden. Ein Verfahren zur gezielten Kombination von komplementären Komponenten in einer automatisierten Produktfertigung wird beispielsweise durch die Patentanmeldung DE 102016 121 092 A1 beschrieben. "Quantum annealing - Wikipedia", 16. Dezember 2019, XP055700706 beschreibt das gleichnamige Verfahren.

Die optimale Kombination von komplementären Komponenten erfordert die Auswertung aller möglichen Kombinationen von komplementären Komponenten. Der dafür erforderliche Rechenaufwand nimmt mit der Anzahl der zu kombinierenden komplementären Komponenten erheblich zu. Kombiniert man beispielsweise zwei Mengen von komplementären Komponenten, die jeweils N Komponenten aufweisen, so ist die Anzahl der möglichen Kombinationen die Fakultät von N. Beispielsweise sind bei einer Anzahl von N = 90 Komponenten 90! = 10^138 Kombination möglich, respektive auszuwerten. Für die Bestimmung einer optimalen Kombination von mehreren komplementären Komponenten ist dementsprechend ein erheblicher Rechenaufwand erforderlich, der entsprechende Ressourcen (Rechnerinfrastruktur, Zeit, usw.) erfordert.

Insbesondere ist das Kombinationsproblem für großen Anzahlen von zu kombinierenden Komponenten für klassische digitale Rechnereinheiten nicht lösbar.

Aufgabe der zugrundeliegenden Erfindung ist es ein Verfahren zur Verfügung zu stellen, dass eine effiziente, einfache und kostengünstige Fertigung von Produkten ermöglicht, die zueinander komplementäre Komponenten aufweisen. Zudem ist es Aufgabe der Erfindung eine Steuerungseinheit zur Verfügung zu stellen, die das Verfahren zumindest teilweise ausführen kann.

Die zugrundeliegende Aufgabe wird durch ein Verfahren gelöst, das die Merkmale des Anspruchs 1 aufweist. Vorteilhafte Ausführungsformen der Erfindung sind durch die Unteransprüche gegeben.

Das erfindungsgemäße Verfahren sieht vor, dass der Kombinationsschritt zumindest teilweise mittels einer quantenbasierten Rechnereinheit durchgeführt wird, wobei die ausgewählten Kombinationen der Komponenten in ihrer Gesamtheit bestmöglich einem Zielwert entsprechen. Die Lösung des Kombinationsproblems, respektive das Auffinden einer optimalen Kombination erfindungsgemäß unter Verwendung der quantenbasierten Rechnereinheit durchgeführt. Die die Produkte bildenden ausgewählten Kombinationen, respektive optimalen Kombinationen, werden mittels der quantenbasierten Rechnereinheit so ausgewählt, dass sich die Merkmale der Komponenten so ergänzen, dass die Gesamtheit der Produkte möglichst einem Zielwert entsprechen, respektive eine bestimmte Qualität aufweisen.

Die Verwendung einer quantenbasierten Rechnereinheit hat den Vorteil, dass die optimale Bestimmung von ausgewählten Kombinationen an komplementären Komponenten mit einem geringeren Zeitaufwand möglich ist. Insbesondere lassen sich unter Verwendung von quantenbasierten Rechnereinheiten auch für eine größere Anzahl von komplementären Komponenten optimale Kombinationen bestimmen.

Erfindungsgemäß ist die quantenbasierte Rechnereinheit ein Quanten Annealer oder eine einen Quanten Annealer simulierende digitale Annealer Einheit. Quanten Annealer sowie einen Quanten Annealer simulierende digitale Annealer Einheiten, respektive quanteninspirierte digitale Rechner, schaffen es unter Ausnutzung von quantenmechanischen Effekten, beispielsweise des Tunneleffekts oder Emulationen davon, eine Lösung für Optimierungsprobleme zu liefern. Vorteilhafterweise wird so auch eine energieeffiziente Lösung des Kombinationsproblems erreicht, da insbesondere Quanten Annealer bis auf die Kühlleistung einen minimalen Energieverbrauch zur Berechnung aufweisen.

Quanten Annealer sind Optimierungsmaschinen, bei denen so genannte Quanten-Bits, respektive Qbits, zur Programmierung verwendet werden. Zu Beginn des Quanten Annealing Prozesses werden alle Qbits in einen quantenmechanischen Zustand der Überlagerung gebracht. Das hierzu notwendige Magnetfeld wird im Zuge des Optimierungsprozesses kontinuierlich reduziert, während gleichzeitig die Qbits so manipuliert werden, dass das Kombinationsproblem implementiert wird. Implementierung bedeutet hier die Ansteuerung der Qbits über zusätzliche externe Magnetfelder und die Einstellung der Kopplungsstärke zwischen den unterschiedlichen Qbits. Die Qbits richten sich im Zuge des folgenden Annealing Optimierungsprozesses so aus, dass die Gesamtenergie des physikalischen Systems minimal wird. Am Ende des Prozesses liegen die Qbits im klassischen Zustand vor und lassen sich somit eindeutig auslesen. Das Ergebnis gibt die Verbindungen zwischen den ausgewählten Kombinationen der Komponenten eindeutig wieder. Quanten Annealer werden beispielsweise von der Firma DWave hergestellt.

Vorzugsweise ist die quantenbasierte Rechnereinheit von einer zur Steuerung der Fertigung vorgesehenen Steuerungseinheit räumlich getrennt und mit dieser kommunikativ verbunden. Dies gilt insbesondere für den Quanten Annealer, wobei die Rechenleistung des Quanten Annealer durch einen Cloud Service zur Verfügung gestellt wird. Dies hat den Vorteil, dass die quantenbasierte Rechnereinheit, insbesondere der kosten und wartungsintensive Quanten Annealer, von der Fertigungsanlage ausgelagert ist.

Als Brückentechnologie dienen derzeit einen Quanten Annealer simulierende digitale Annealer Einheiten. Diese digitalen Annealer Einheiten führen ein klassisches thermisches Annealing durch, sind aber in der Lage während der Sättigung des klassischen Algorithmus durch Injektion von zusätzlicher Temperatur den quantenmechanischen Tunneleffekt zu emulieren. Dazu wird dem System erlaubt, gegen Ende des klassischen Annealingprozesses sporadisch größere Änderungen durchzuführen als dies durch ein rein klassisches Verfahren erlaubt wäre. Während ein Quanten Annealer ein Minimum hinter einem Potentialberg erreichen kann, in dem eine Wahrscheinlichkeit besteht durch den Berg hindurch "zu tunneln", erreicht der Digital Annealer dieses Ziel über die kurzzeitig höhere Temperatur, um somit klassisch "über den Potentialberg" zu gelangen. In der Theorie erreichen beide Technologien ein tieferes Minimum. Beispielsweise ist derzeit eine digitale Annealer Einheit der Firma Fujitsu in der Lage bereits zum heutigen Tage ein Kombinationsproblem mit einer Problemgröße von N=90 zu berechnen, und ist daher für einen Einsatz in der verarbeitenden Industrie geeignet. Digitale Annealer Einheiten haben den Vorteil, dass sie kostengünstig und räumlich kompakt sind, sodass sie vorzugsweise räumlich in einer Fertigungsanlage integrierbar sind oder in einer Steuerungseinheit der Fertigungsanlage einsetzbar sind.

Erfindungsgemäß wird eine Funktion der Merkmale aller möglichen Kombinationen der Komponenten bestimmt, wobei die Funktion den komplementären Zusammenhang zwischen den Merkmalen beschreibt. Bei einem Produkt, bei dem die Komponenten $A_i$ mit den Merkmalen $a_i$ mit den komplementären Komponenten $B_j$ mit den Merkmalen $b_j$ kombiniert werden, lässt sich die Funktion als $f(a_i, b_j)$ aufschreiben. Die Funktion $f(a_i, b_j)$ beschreibt den komplementären Zusammenhang zwischen den Merkmalen $a_i$ und $b_j$, wobei die Merkmale beispielsweise Abmessungen, Gewichte oder Materialeigenschaften sind. In einer einfachen Form ist die Funktion zum Beispiel durch die Addition zweier Längen gebildet und weist die Form $f(a_i, b_j) = a_i + b_j$ auf. Vorteilhafterweise lässt sich durch die Verwendung der Funktion der Zusammenhang zwischen den Merkmalen beschreiben, sodass sich die Auswirkungen einer Variation der Merkmale auf einfache Weise ermitteln lässt.

Erfindungsgemäß werden beim Kombinationsschritt Varianzen aller möglichen Kombinationen der Komponenten bestimmt, wobei die jeweilige Varianz einer Differenz aus dem jeweiligen Ergebnis der Funktion und dem Zielwert entspricht. Der Zielwert wird auch als Key Perfomance Indicator KPI bezeichnet. Für eine Kombination aus den Komponenten $A_i$ und $B_j$ mit den Merkmalen $a_i$ und $b_j$, wäre die entsprechende Varianz das Ergebnis der Funktion $f(a_i, b_j)$ minus dem Zielwert KPI. Für den Fall, dass die Merkmale $a_i$ und $b_j$ der Komponenten keine Abweichung vom Sollwert haben, entspricht das Ergebnis der Funktion dem Zielwert. Bei einer idealen Produktion der Komponenten ist die Varianz bezüglich des Zielwerts somit gleich Null, wobei dieser Fall bei einer herstellungsbedingten Variation der Merkmale theoretisch möglich, aber sehr unwahrscheinlich ist. Durch die Bestimmung der Varianzen erhält man vorteilhafterweise eine Aussage darüber, in wieweit die jeweilige Kombination aus Komponenten den Zielwert entspricht.

Eine bevorzugte Ausführung der Erfindung zeichnet sich dadurch aus, dass die Bestimmung der jeweiligen Ergebnisse der Funktionen und/oder der Varianzen mittels einer klassischen digitalen Rechnereinheit durchgeführt wird. Die Rechenleistung von klassischen digitalen Rechnereinheit ist für die Berechnung der Varianzen von allen möglichen Kombinationen von komplementären Komponenten typischerweise ausreichend. Die Verwendung einer klassischen digitalen Rechnereinheit hat den Vorteil, dass diese kostengünstig ist und innerhalb einer Fertigungsanlage vorzugsweise als Teil einer Steuerungseinheit auf einfache Weise implementierbar ist.

Erfindungsgemäß wird den Varianzen von allen möglichen Kombinationen der Komponenten jeweils ein Quanten-Bit als binäre Größe zugeordnet. Das Quanten-Bit, respektive Qbit, kann im klassischen Zustand die Werte 0 oder 1 aufweisen und wird im Folgenden mit $x\_ij$ bezeichnet. Vorteilhafterweise wird so die Implementierung des zugrundeliegenden Kombinationsproblems auf eine quantenbasierte Rechnereinheit realisiert.

Eine bevorzugte Ausführung der Erfindung sieht vor, dass beim Kombinationsschritt eine Zielfunktion verwendet wird, die dem Minimum der Quadratsumme der Quanten-Bits aller möglichen Kombinationen entspricht. Eine derartige Zielfunktion ermöglicht vorteilhafter Weise die Implementierung auf eine quantenbasierte Rechnereinheit.

Eine bevorzugte Ausführung der Erfindung sieht vor, dass beim Kombinationsschritt Nebenbedingungen verwendet werden, die berücksichtigen, dass alle Komponenten miteinander kombiniert werden. Durch die Nebenbedingungen wird erreicht, dass jede Komponente jeweils einer komplementären Komponente kombiniert wird.

Insbesondere wird bei einem Produkt, das zwei komplementäre Komponenten aufweist, mittels einer ersten Nebenbedingung berücksichtigt, dass jeder Komponente $A\_i$ jeweils eine komplementäre Komponente $B\_j$ zugeordnet wird. Mittels einer zweiten Nebenbedingung wird berücksichtigt, dass wiederum jeder Komponente $B\_j$ jeweils eine komplementäre Komponente $A\_i$ zugeordnet wird. Die Verwendung von beiden Nebenbedingungen stellt vorteilhafterweise sicher, dass eine eineindeutige Zuordnung zwischen den Komponenten erzielt wird.

Eine bevorzugte Ausführung der Erfindung sieht vor, dass die Nebenbedingungen beim Kombinationsschritt mittels eines Skalierungsfaktors gewichtet werden. Im Folgenden wird der Skalierungsfaktors, respektive Lagrange Parameter, mit $\lambda$ bezeichnet. Mithilfe des Skalierungsfaktors lässt sich der Einfluss der Nebenbedingungen vorteilhafterweise variabel einstellen.

Eine bevorzugte Ausführung der Erfindung sieht vor, dass beim Kombinationsschritt eine Quadratische Uneingeschränkte Binäre Optimierung (QUBO) verwendet wird, die eine Summe aus der Zielfunktion und den Nebenbedingungen ist. Beim Kombinationsschritt wird die Quadratische Uneingeschränkte Binäre Optimierung (QUBO) mittels der quantenbasierten Rechnereinheit durchgeführt, wobei die quantenbasierte Recheneinheit das Minimum der Summe bestimmt und als Ergebnis die ausgewählten Kombinationen der Komponenten herausgibt, die in ihrer Gesamtheit bestmöglich dem Zielwert entsprechen. Die Quadratische Uneingeschränkte Binäre Optimierung (QUBO) weist quadratische Kombinationen von Qbits auf, sodass die Bestimmung der optimalen Kombinationen vorteilhafterweise mittels einer quantenbasierten Rechnereinheit effizient durchführbar ist.

Erfindungsgemäß werden die Komponenten in einem Transportschritt zu einer Fügeeinheit transportiert, um in einem Fügeschritt zum jeweiligen Produkt zusammengefügt zu werden. Identifikatoren werden mittels Identifikationsmitteln der Komponenten der ausgewählten Kombinationen in einem von der Fügeeinheit auslesbaren Datensatz abgespeichert. Der Datensatz wird beispielsweise in einem Speichermittel der Steuerungseinheit abgespeichert, insbesondere wobei Identifikatoren der Komponenten einer ausgewählten Kombination in Zuordnung zueinander abgespeichert werden. Beispielsweise sind die Identifikatoren Seriennummern oder andere alphanumerische Kennzeichen und die Identifikationsmittel Barcodes, QR-Codes oder RFID-Tags. Die Abspeicherung eines Datensatzes, der die Identifikatoren der ausgewählten Kombination aufweist, ermöglicht es der Fügeeinheit eine Komponente mit der entsprechenden beim Kombinationsschritt ausgewählten komplementären Komponente zu einem Produkt zusammenzufügen.

Eine bevorzugte Ausführung der Erfindung sieht vor, dass die ausgewählten Kombinationen der Komponenten gemeinsam als Paare transportiert werden. Beispielsweise werden die ausgewählten Kombinationen innerhalb eines Transportmittels zur Fügeeinheit transportiert und dort zu einem Produkt zusammengefügt. Dies hat den Vorteil, dass die optimalen Kombinationen von komplementären Komponenten voneinander räumlich separiert sind, und eine unbeabsichtigte Kombination von komplementären Komponenten verhindert wird.

Eine bevorzugte Ausführung der Erfindung sieht vor, dass die Komponenten mit einer von der Fügeeinheit identifizierbaren Kennung versehen werden, die ihre komplementären Komponenten der ausgewählten Kombinationen angibt. Vorzugsweise handelt es sich bei der Kennung um einen RFID-Tag, in dem die Identifikatoren der komplementären Komponenten der ausgewählten Kombination hinterlegt sind. Die Kennung kann von der Fügeeinheit ausgelesen werden, sodass der Fügeeinheit bekannt ist, welche Komponente mit der jeweiligen komplementären Komponente zusammenzufügen ist. Vorteilhafterweise können die Komponenten unabhängig voneinander zur Fügeeinheit transportiert werden und dort zum gewünschten Produkt zusammengefügt werden, insbesondere ohne, dass die Fügeeinheit auf den Datensatz mit den Identifikatoren der Komponenten der ausgewählten Kombinationen zugreifen muss.

Die erfindungsgemäße Aufgabe wird zudem von einer Steuerungseinheit zur Steuerung der Fertigung eines Produkts gelöst, die dazu eingerichtet ist das zuvor beschriebene Verfahren auszuführen.

Im Folgenden werden bevorzugte Ausführungsbeispiele der vorliegenden Erfindung unter Bezugnahme auf die Figuren erläutert:

Fig. 1: zeigt eine schematische Darstellung der Kombination von zwei komplementären Komponenten $A\_i$ und $B\_j$ der Mengen A und B,

Fig. 2: zeigt eine schematische Darstellung des erfindungsgemäßen Verfahrens zur Steuerung der Fertigung eines Produkts, und

Fig. 3: zeigt eine schematische Darstellung einer Fertigungsanlage, die das erfindungsgemäße Verfahren ausführt.

Nachfolgend werden Merkmale der vorliegenden Erfindung anhand von bevorzugten Ausführungsformen erläutert.

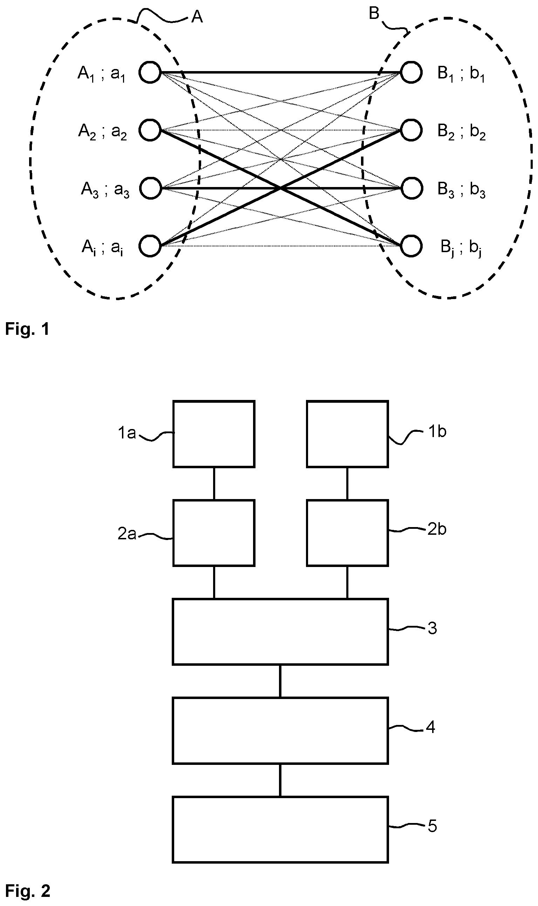

Fig. 1 zeigt in Form eines mathematischen Graphen exemplarisch die Kombination von zwei zueinander komplementären Komponenten. Die erste Menge A weist eine Anzahl N an ersten Komponenten $A_i$ auf. Diese werden mit den zweiten Komponenten $B_j$ der zweiten Menge B kombiniert, um daraus jeweils ein Produkt zu bilden. Die gestrichelten Linien kennzeichnen alle möglichen Kombinationen, während die durchgezogenen Linien die ausgewählten Kombinationen, respektive die optimalen Kombinationen, darstellen. Die erste Komponenten $A_i$ weisen ein Merkmal $a_i$ auf, welches komplementär zum Merkmal $b_j$ der zweiten Komponente $B_j$ ist und eine herstellungsbedingte Variation aufweist. Auch das Merkmal $b_j$ weist eine herstellungsbedingte Variation auf. Ziel der Erfindung ist es ein Verfahren zur Verfügung zu stellen, dass eine optimale Kombination der Komponenten $A_i$ und $B_j$ auf Grundlage der Merkmale $a_i$ und $b_j$ erlaubt, sodass das aus den Komponenten $A_i$ und $B_j$ gebildete Produkt eine bestimmte Qualitätsvorgabe erreicht. Beispielsweise handelt es sich bei den Komponenten um Bauteile, die als Produkt zu einer Bauteilgruppe zusammengefügt werden, oder um Reinstoffe, die als Produkt zu einer chemischen Verbindung zusammengefügt werden. Die Merkmale können beispielsweise Abmessungen, Gewichte oder Materialeigenschaften sein.

Fig. 2 zeigt eine schematische Darstellung des erfindungsgemäßen Verfahrens, wobei die ersten Komponenten $A_i$ mittels eines ersten Produktionsprozesses 1a und die zweiten Komponenten $B_j$ mittels eines zweiten Produktionsprozesses hergestellt werden. Produktionsbedingt weisen die Merkmale $a_i$ und $b_j$ der Komponenten $A_i$ und $B_j$ Variationen auf. Die Merkmale $a_i$ der Komponenten $A_i$ werden mittels eines ersten Messprozesses 2a bestimmt und die Merkmale $b_j$ der Komponenten $B_j$ werden mittels eines zweiten Messprozesses 2b bestimmt. Beispielsweise wird eine Abmessung, ein Gewicht oder eine Materialeigenschaft mittels der Messprozesse 2a und 2b bestimmt. Die Komponenten $A_i$ und $B_j$ weisen ein Identifikationsmittel 13 auf, die einen eineindeutigen Identifikator der jeweiligen Komponente $A_i$ und $B_j$ aufweisen. Das Identifikationsmittel 13 sind beispielsweise Barcodes, QR-Codes oder RFID-Tags, wobei der Identifikator zum Beispiel eine Seriennummer oder ein anderes alphanumerisches Kennzeichen ist. Die durch die Messprozesse 2a und 2b bestimmten Merkmale $a_i$ und $b_j$ der Komponenten $A_i$ und $B_j$ werden in Zuordnung zum jeweiligen Identifikator in einem Speichermittel abgespeichert. Insbesondere handelt es sich bei dem Speichermittel um ein Speichermittel 16 einer Steuerungseinheit 10. Alternativ kann das jeweilige des Merkmals $a_i$ auch in einem an der Komponente angeordneten Speichermittel abgespeichert werden. Die komplementären Komponenten $A_i$ und $B_j$ werden auf Grundlage der gemessenen Merkmale $a_i$ und $b_j$ in einem Kombinationsschritt 3 miteinander kombiniert, sodass jeweils eine ausgewählte Kombination der Komponenten $A_i$ und $B_j$ jeweils ein Produkt bildet.

Der Kombinationsschritt 3 wird zumindest teilweise von einer quantenbasierten Rechnereinheit 18 durchgeführt, wobei die ausgewählten Kombinationen Komponenten $A_i$ und $B_j$ in ihrer Gesamtheit bestmöglich einem Zielwert, respektive einem Key Performance Indicator KPI, entsprechen. Beispielhaft wird im Folgenden die Bestimmung einer Quadratische Uneingeschränkte Binäre Optimierung (QUBO), die für die Programmierung einer quantenbasierten Rechnereinheit 18 verwendet wird, für die Problemstellung aus Fig. 1 aufgezeigt.

Für jede Komponente $A_i$ mit dem jeweiligen Merkmal $a_i$ wird genau eine komplementäre Komponente $B_j$ mit dem jeweiligen Merkmal $b_j$ gesucht, so dass der Ausdruck

$$\sum_{j} x_{ij}(f(a_i, b_j) - KPI)^2 \qquad (1)$$

minimiert wird. Die Kombination von einem $a_i$ und einem $b_j$ wird als $x_{ij}$ bezeichnet, wobei $x_{ij}$ eine binäre Zahl mit dem Wert 0 oder 1 ist und mittels eines Qbits bei der Verwendung einer quantenbasierten Rechnereinheit 18 implementiert wird. Die Funktion $f(a_i, b_j)$ ist eine beliebige Funktion, die den komplementären Zusammenhang zwischen den Merkmale $a_i$ und $b_j$ der Komponenten $A_i$ und $B_j$ beschreibt, respektive in Relation setzt. Der obige Ausdruck berechnet für jedes $a_i$ die Varianz aller Kombinationen mit $b_j$, $1 < j < N$, und die Variable $x_{ij}$ (0 oder 1) entscheidet, ob diese Kombination einen Betrag zur Summe liefert. Summiert man den obigen Ausdruck über alle Elemente der Menge A und minimiert das Ergebnis, so erhält man die folgende Zielfunktion für das Kombinationsproblem

$$\min\left(\sum_{i}\sum_{j} x_{ij}(f(a_i, b_j) - KPI)^2\right). \qquad (2)$$

Für alle Kombinationen der Komponenten A_i und B_j werden die jeweiligen Ergebnisse der Funktion f (a_i, b_j) in Abhängigkeit der jeweiligen Merkmale a_i und b_j bestimmt. Dies erfolgt vorzugsweise mittels einer klassischen digitalen Rechnereinheit 17, welche insbesondere ein Bestandteil der Steuerungseinheit 10 ist. Die Varianz, also die Differenz aus dem jeweiligen Ergebnis der Funktion f(a_i, b_j) und dem Zielwert KPI, wird vorzugsweise ebenfalls von einer klassischen digitalen Rechnereinheit 17 bestimmt.

Durch die Einführung von Nebenbedingungen wird bewirkt, dass alle Komponenten A_i und B_j miteinander kombiniert werden. Insbesondere wird bewirkt, dass als Ergebnis der Minimierung des obigen Ausdrucks nicht alle x_ij gleichzeitig verschwinden. Dazu fordert man, dass für alle a_i genau ein b_j zugeordnet wird. Es gilt dann:

$$\sum_j \left( x_{ij} \right) = 1, \tag{3}$$

was in den folgenden Ausdruck

$$\sum_i \left( \sum_j x_{ij} - 1 \right)^2 = 0 \tag{4}$$

für die erste Nebenbedingung transformiert wird. Diese Größe kann als Strafterm für das Nichteinhalten der Nebenbedingung verstanden werden. Sollte ein a_i mit keinem oder mit mehreren b_j verbunden werden, so liefert die Nebenbedingung einen Beitrag - nur im Falle einer eindeutigen Kombination (A_i, B_j), respektive eines eindeutigen Paares (A_i, B_j) verschwindet der Beitrag dieses Terms. Im Zuge der Optimierung wird der Algorithmus also gezielt jeder Komponente A_i der Menge A genau eine komplementäre Komponente B_j der Menge B zuordnen.

Der quadratische Ausdruck wird vereinfacht und liefert

$$\sum_i \left( \sum_j \left( x_{ij} \right)^2 + 2 \sum_j \sum_{k>j} x_{ij} x_{ik} - 2 \sum_j x_{ij} + 1 \right) = 0. \tag{5}$$

Mit $x_{ij}^2 = x_{ij}$ für binäre Variablen erhält man

$$\sum_i \left( \sum_j x_{ij} + 2 \sum_j \sum_{k>j} x_{ij} x_{ik} - 2 \sum_j x_{ij} + 1 \right) = 0 \tag{6}$$

und

$$\sum_i \left( 2 \sum_j \sum_{k>j} x_{ij} x_{ik} - \sum_j x_{ij} + 1 \right) = 0 \tag{7}$$

Aufgrund der Symmetrie der Aufgabe muss sichergestellt werden, dass ebenfalls für alle b_j genau ein a_i zugeordnet wird. Somit gilt:

$$\sum_i \left( x_{ij} \right) = 1 \tag{8}$$

Letzterer Ausdruck wird transformiert zu

$$\sum_j \left( \sum_i x_{ij} - 1 \right)^2 = 0. \tag{9}$$

Folgt man der Herleitung der ersten Nebenbedingung, so erhält man folgenden Ausdruck für die zweite Nebenbedingung:

$$\sum_j \left( 2 \sum_i \sum_{k>i} x_{ij} x_{kj} - \sum_i x_{ij} + 1 \right) = 0 \tag{10}$$

Der Ausdruck für die Quadratische Uneingeschränkte Binäre Optimierung (QUBO) des Kombinationsproblems besteht aus der Summe der Zielfunktion und den beiden Nebenbedingungen:

$$\min\left( \sum_i \sum_j x_{ij}(f(a_i, b_j) - KPI)^2 \right.$$
$$+ \lambda \left( \sum_i \left( 2 \sum_j \sum_{k>j} x_{ij} x_{ik} - \sum_j x_{ij} + 1 \right) \right) \tag{11}$$
$$\left. + \lambda \left( \sum_j \left( 2 \sum_i \sum_{k>i} x_{ij} x_{kj} - \sum_i x_{ij} + 1 \right) \right) \right)$$

wobei die Nebenbedingungen mit einem Skalierungsfaktor λ, dem sogenannten Lagrange Parameter, gewichtet werden. Je grösser der Lagrange Parameter gewählt wird, desto grösser ist der Einfluss der Nebenbedingungen während der Optimierung sein. Der QUBO lässt sich letztendlich vereinfachen zu Ausdruck (12):

$$\min\left( \sum_i \sum_j x_{ij}(f(a_i, b_j) - KPI)^2 \right.$$
$$\left. + \lambda \left( \sum_i \sum_j \sum_{k>j} x_{ij} x_{ik} + \sum_j \sum_i \sum_{k>i} x_{ij} x_{kj} - \sum_i \sum_j x_{ij} \right) \right)$$

wobei die Konstanten, die keinen Einfluss auf die Minimierung haben, weggelassen wurden.

Die Quadratische Uneingeschränkte Binäre Optimierung (QUBO) wird mittels einer quantenbasierten Rechnereinheit 18 durchgeführt. Als Ergebnis des Rechenprozesses liegen die Qbits im klassischen Zustand vor und lassen sich somit eindeutig auslesen, wobei als Ergebnis die ausgewählten Kombinationen der Komponenten A_i und B_j geliefert wird. Die von der quantenbasierten Rechnereinheit 18 bestimmte Lösung entspricht nicht notwendigerweise dem absoluten Minimum des Kombinationsproblems. Bei dem vorgestellten Verfahren ist aber auch die "zweitbeste Lösung" hinreichend, bzw. wird dies aufgrund der Performance der quantenbasierten Rechnereinheit 18 hingenommen.

Die Komponenten A_i und B_j werden in einem Transportschritt 4 zu einer Fügeeinheit 15 transportiert, um in einem Fügeschritt 5 zum jeweiligen Produkt zusammengefügt zu werden. Damit beim Fügeschritt 5 die ausgewählten Kombinationen von Komponenten A_i und B_j für das Zusammenfügen des jeweiligen Produkts verwendet werden, müssen der Fügeeinheit 15 die ausgewählten Kombinationen bekannt sein. Dafür werden vorzugsweise die Identifikatoren der Identifikationsmittel 13 der Komponenten A_i und B_j der ausgewählten Kombinationen in einem Datensatz abgespeichert, auf den die Fügeeinheit 15 zugreifen kann. Beispielsweise kann der Datensatz in Form einer Tabelle vorliegen, wobei einem Produkt die Identifikatoren der Komponenten A_i und B_j der jeweiligen ausgewählten Kombination zugeordnet sind.

Vorzugsweise werden die ausgewählten Kombinationen der Komponenten A_i und B_j beim Transportschritt 4 gemeinsam als Paare in einer Transporteinheit zur Fügeeinheit 15 transportiert.

Vorzugsweise werden die Komponenten A_i und B_j mit einer von der Fügeeinheit 15 identifizierbaren Kennung versehen. Beispielsweise ist die Kennung der Komponente A_i mit dem Identifikator versehen, der die komplementären Komponente B_j der ausgewählten Kombinationen angibt. Auf diese Weise kann die Fügeeinheit 15 durch Auslesen der Kennung ermitteln, welche Komponenten A_i und B_j zu einem Produkt zusammenzufügen sind. Bevorzugt handelt es sich bei der Kennung einen RFID-Tag.

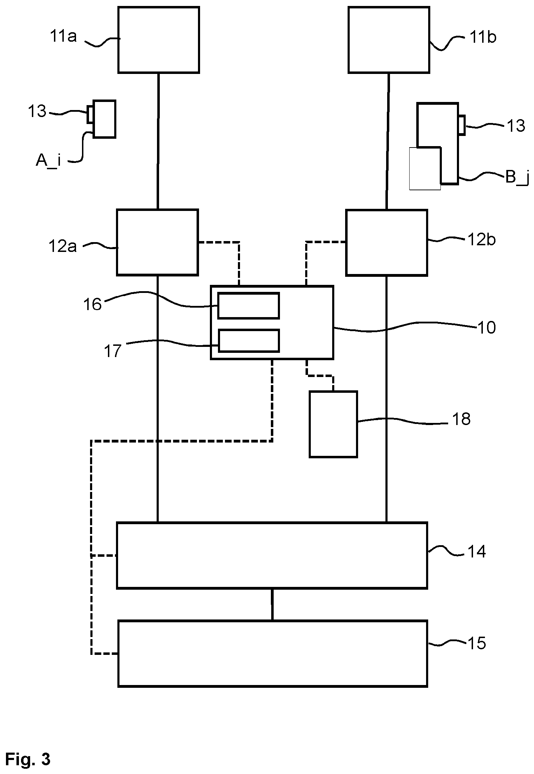

Fig. 3 zeigt eine schematische Darstellung einer Fertigungsanlage zur Fertigung Produkts aus den komplementären Komponenten A_i und B_j, wobei die Steuerungseinheit 10 zur Steuerung der Fertigung verwendet wird. Die Fertigungsanlage umfasst eine erste Produktionseinheit 11a in der die ersten Komponenten A_i produziert werden. Die zweiten Komponenten B_j werden in der zweiten Produktionseinheit 11b produziert. Beide Komponenten A_i und B_j werden mit einem Identifikationsmittel 13 versehen, welches einen eineindeutigen Identifikator für die jeweilige Komponente A_i und B_j aufweist. Die Merkmale a_i der ersten Komponenten A_i werden mittels einer ersten Messeinheit 12a bestimmt. Eine zweite Messeinheit 12b bestimmt die Merkmale b_j der zweiten Komponente B_j. Die jeweiligen Merkmale a_i und b_j der Komponenten A_i und B_j werden in Zuordnung zu ihren Indikatoren in einem Speichermittel 16 der Steuerungseinheit 10 abgespeichert. Durch die gestrichelten Linien in Fig. 3 wird eine kommunikative Verbindung zwischen den Einheiten der Fertigungsanlage dargestellt, über die die Steuerungseinheit 10 die Einheiten steuern kann und von denen sie Informationen. Beispielsweise erhält die Steuerungseinheit die jeweiligen Merkmale a_i der Komponenten A_i von der ersten Messeinheit. Auch die Kommunikation der Steuerungseinheit 10 mit der quantenbasierten Rechnereinheit 18 ist gestrichelt dargestellt. Die durchgezogenen Linien zwischen den Einheiten stellen Transportwege der Komponenten A_i und B_j dar.

Auf Grundlage der gemessenen Merkmale a_i und b_j wird mittels der klassischen digitalen Rechnereinheit 17 für alle Kombinationen das Ergebnis der Funktion f(a_i, b_j) bestimmt. Die Rechnereinheit 17 ist vorzugsweise eine Komponente der Steuerungseinheit 10. Mittels der klassischen digitalen Rechnereinheit 17 wird zudem für alle Kombinationen die jeweilige Varianz ausgerechnet, die der Differenz aus dem jeweiligen Ergebnis der Funktion f(a_i, b_j) und dem Zielwert KPI entspricht. Die von der klassischen Rechnereinheit 17 bestimmten Varianzen aller Kombinationen werden an eine quantenbasierte Rechnereinheit 18 übermittelt. Mittels der quantenbasierten Rechnereinheit 18 wird die zuvor beschriebene Quadratische Uneingeschränkte Binäre Optimierung (QUBO) durchgeführt. Vorzugsweise handelt es sich bei der quantenbasierten Rechnereinheit 18 um einen Quanten Annealer oder um eine einen Quanten Annealer simulierende digitale Annealer Einheit. Im Falle eines Quanten Annealers ist sich dieser vorzugsweise räumlich getrennt von der Steuerungseinheit 10, wobei die Rechnerdienstleistung des Quanten Annealers in Form eines Cloud Service durchgeführt wird. Im Falle einer einen Quanten Annealer simulierenden Annealer Einheit kann die quantenbasierten Rechnereinheit 18 räumlich in die Fertigungsanlage integriert werden.

Die Komponenten A_i und B_j werden mittels einer Transporteinheit 14 zu einer Fügeeinheit 15 transportiert, wobei die Steuerungseinheit 10 die Transporteinheit 14 und Fügeeinheit 15 so steuert, dass die ausgewählten Kombinationen der Komponenten A_i und B_j zu den jeweiligen Produkten zusammengefügt werden.

Bezugszeichenliste:

A     erste Menge
B     zweite Menge
A_i   erste Komponente/n
B_j   zweite Komponente/n
a_i   Merkmal der ersten Komponente/n
b_j   Merkmal der zweiten Komponente/n
f     Funktion, der Merkmale
KPI  Zielwert

x_ij    Quanten-Bit, Qbit

1a    erster Produktionsprozess
1b    zweiter Produktionsprozess
2a    erster Messprozess
2b    zweiter Messprozess
3    Kombinationsschritt
4    Transportschritt
5    Fügeschritt

10    Steuerungseinheit
11a    erste Produktionseinheit
11b    zweite Produktionseinheit
12a    erste Messeinheit
12b    zweite Messeinheit
13    Identifikationsmittel
14    Transporteinheit
15    Fügeeinheit
16    Speichermittel
17    klassische digitale Rechnereinheit
18    quantenbasierte Rechnereinheit

## Patentansprüche

1. Verfahren zur Steuerung der Fertigung eines Produkts, das zumindest zwei zueinander komplementäre Komponenten ($A\_i$, $B\_j$) aufweist, von denen jeweils eine Menge (A, B) in unabhängigen Produktionsprozessen (1a, 1b) hergestellt worden ist und die jeweils zumindest ein Merkmal ($a\_i$, $b\_j$) mit einer herstellungsbedingten Variation aufweisen,

   wobei die Merkmale ($a\_i$, $b\_j$) der Komponenten ($A\_i$, $B\_j$) durch Messprozesse (2a, 2b) bestimmt worden sind und in Zuordnung zu einem Identifikator der jeweiligen Komponente ($A\_i$, $B\_j$) in einem Speichermittel (16) abgespeichert worden sind, und
   wobei die komplementären Komponenten ($A\_i$, $B\_j$) in einem Kombinationsschritt (3) auf Grundlage der jeweiligen Merkmale ($a\_i$, $b\_j$) derart aus den Mengen (A, B) kombiniert werden, dass jeweils eine ausgewählte Kombination der Komponenten ($A\_i$, $B\_j$) jeweils ein Produkt bildet,
   **dadurch gekennzeichnet,**
   **dass** der Kombinationsschritt (3) zumindest teilweise mittels einer quantenbasierten Rechnereinheit (18) durchgeführt wird, wobei die ausgewählten Kombinationen der Komponenten ($A\_i$, $B\_j$) in ihrer Gesamtheit bestmöglich einem Zielwert entsprechen,
   **dass** die quantenbasierte Rechnereinheit (18) ein Quanten Annealer oder eine einen Quanten Annealer simulierende digitale Annealer Einheit ist, insbesondere wobei die quantenbasierte Rechnereinheit (18) von einer zur Steuerung der Fertigung vorgesehenen Steuerungseinheit (10) räumlich getrennt ist und mit dieser kommunizieren kann,
   **dass** beim Kombinationsschritt (3) eine Funktion ($f(a\_i, b\_j)$) der Merkmale ($a\_i$, $b\_j$) der Komponenten ($A\_i$, $B\_j$) verwendet wird, die den komplementären Zusammenhang zwischen den Merkmalen ($a\_i$, $b\_j$) beschreibt,
   **dass** beim Kombinationsschritt (3) Varianzen aller möglichen Kombinationen der Komponenten ($A,\_i$, $B\_j$) bestimmt werden, wobei die jeweilige Varianz einer Differenz aus dem jeweiligen Ergebnis der Funktion ($f(a\_i, b\_j)$) und dem Zielwert (KPI) entspricht,
   **dass** beim Kombinationsschritt (3) den Varianzen aller möglichen Kombinationen der Komponenten ($A\_i$, $B\_j$) jeweils ein Quanten-Bit ($x\_{ij}$) als binäre Größe zugeordnet wird,
   **dass** die Komponenten ($A\_i$, $B\_j$) in einem Transportschritt (4) zu einer Fügeeinheit (15) transportiert werden und in einem Fügeschritt (5) zum jeweiligen Produkt zusammengefügt werden, wobei die Identifikatoren der ausgewählten Kombinationen der Komponenten ($A\_i$, $B\_j$) in einem von der Fügeeinheit (15) auslesbaren Datensatz abgespeichert werden und die Fügeeinheit (15) auf Grundlage der Identifikatoren eine Komponente mit der entsprechenden beim Kombinationsschritt ausgewählten komplementären Komponente zu einem Produkt zusammenfügt.

2. Verfahren zur Fertigungssteuerung nach Anspruch 1, **dadurch gekennzeichnet, dass** die Bestimmung der Ergebnisse der Funktionen (f(a_i,b_j)) und/oder der Varianzen mittels einer klassischen digitalen Rechnereinheit (17) durchgeführt wird.

3. Verfahren zur Fertigungssteuerung nach Anspruch 1, **dadurch gekennzeichnet, dass** beim Kombinationsschritt (3) eine Zielfunktion verwendet wird, die dem Minimum der Quadratsumme der Quanten-Bits (x_ij) aller möglichen Kombinationen entspricht, insbesondere wobei die Zielfunktion

$$\min\left(\sum_i \sum_j x_{ij}(f(a_i, b_j) - KPI)^2\right)$$

ist.

4. Verfahren zur Fertigungssteuerung nach einem der vorherigen Ansprüche, **dadurch gekennzeichnet, dass** beim Kombinationsschritt (3) Nebenbedingungen verwendet werden, die berücksichtigen, dass alle Komponenten (A_i, B_j) miteinander kombiniert werden,

insbesondere wobei eine erste Nebenbedingung berücksichtigt, dass jeder Komponente (A_i) jeweils eine komplementäre Komponente (B_j) zugeordnet wird, wobei die erste Nebenbedingung unter Verwendung eines Quanten-Bits (x_ij) bevorzugt

$$\sum_j (x_{ij}) = 1$$

ist, und
insbesondere wobei eine zweite Nebenbedingung berücksichtigt, dass jeder Komponente (B_j) jeweils eine komplementäre Komponente (A_i) zugeordnet wird, wobei die zweite Nebenbedingung unter Verwendung eines Quanten-Bits (x_ij) bevorzugt

$$\sum_i (x_{ij}) = 1$$

ist.

5. Verfahren zur Fertigungssteuerung nach Anspruch 4, **dadurch gekennzeichnet, dass** beim Kombinationsschritt (3) die Nebenbedingungen mittels eines Skalierungsfaktors ($\lambda$) gewichtet werden.

6. Verfahren zur Fertigungssteuerung nach den Ansprüchen 4 oder 5, **dadurch gekennzeichnet, dass** beim Kombinationsschritt (3) eine Summe aus der Zielfunktion und den Nebenbedingungen als Quadratische Uneingeschränkte Binäre Optimierung (QUBO) verwendet wird, insbesondere wobei die Quadratische Uneingeschränkte Binäre Optimierung (QUBO) den Ausdruck

$$\min\left(\sum_i \sum_j x_{ij}(f(a_i, b_j) - KPI)^2 \right.$$

$$\left. + \lambda\left(\sum_i \sum_j \sum_{k>j} x_{ij}x_{ik} + \sum_j \sum_i \sum_{k>i} x_{ij}x_{kj} - \sum_i \sum_j x_{ij}\right)\right)$$

aufweist.

7. Verfahren zur Fertigungssteuerung nach Anspruch 6, **dadurch gekennzeichnet, dass** die Quadratische Uneingeschränkte Binäre Optimierung (QUBO) mittels der quantenbasierten Rechnereinheit (18) durchgeführt wird.

8. Verfahren zur Fertigungssteuerung nach Anspruch 1, **dadurch gekennzeichnet, dass** die ausgewählten Kombinationen der Komponenten (A_i, B_j) gemeinsam als Paare transportiert werden.

9. Verfahren zur Fertigungssteuerung nach Anspruch 1, **dadurch gekennzeichnet, dass** die Komponenten (A_i, B_j) mit einer von der Fügeeinheit (15) identifizierbaren Kennung versehen werden, die die Identifikatoren der komplementären Komponenten (A_i, B_j) der ausgewählten Kombinationen angibt, insbesondere wobei die Kennung ein RFID-Tag ist.

10. Steuerungseinheit zur Steuerung der Fertigung eines Produkts, wobei die Steuerungseinheit (10) dazu eingerichtet ist das Verfahren gemäß der Ansprüche 1 bis 9 auszuführen.

**Claims**

1. Method for controlling the manufacture of a product that includes at least two components (A_i, B_j) that are complementary to each other, of which one set (A, B) of each has been manufactured in independent production processes (1a, 1b) and each includes at least one feature (a_i, b_j) with a variation induced by the manufacturing process,

   wherein the features (a_i, b_j) of the components (A_i, B_j) have been determined by measurement processes (2a, 2b) and have been stored in a storage means (16) with assignment to an identifier of the respective component (A_i, B_j), and
   wherein the complementary components (A_i, B_j) are combined from the sets (A, B) in a combination step (3) based on the respective features (a_i, b_j) in such a way that each selected combination of the components (A_i, B_j) forms a product in each case,
   **characterized in that** the combination step (3) is performed at least in part by means of a quantum-based computing unit (18), wherein the selected combinations of the components (A_i, B_j) in their entirety correspond optimally to a target value,
   **in that** the quantum-based computing unit (18) is a quantum annealer or an annealer unit that simulates a quantum annealer, in particular wherein the quantum-based computing unit (18) is separated spatially from a control unit (10) intended for controlling production and can communicate therewith,
   **in that** in the combination step (3) a function (f(a_i, b_j)) of the features (a_i, b_j) of the components (A_i, B_j) is used that describes the complementary relationship between the features (a_i, b_j),
   **in that** in the combination step (3) variants of all possible combinations of the components (A_i, B_j) are determined, wherein the respective variant corresponds to a difference from the respective result of the function (f(a_i, b_j)) and the target value (KPI),
   in the combination step (3),
   **in that** in the combination step (3) a quantum bit (x_ij) is assigned as binary variable to the variants of all possible combinations of the components (A_i, B_j),
   **in that** in a transport step (4) the components (A_i, B_j) are transported to an adding unit (15) and in an adding step (5) added to the respective product, wherein the identifiers of the selected combinations of components (A_i, B_j) are stored in a dataset that can be read out by the adding unit (15), and the adding unit (15) adds a component with the corresponding complementary component selected in the combination step to a product on the basis of the identifiers.

2. Manufacturing control method according to Claim 1, **characterized in that** the determination of the results of the functions (f(a_i, b_j)) and/or of the variants performed by means of a classic digital computing unit (17).

3. Manufacturing control method according to Claim 1, **characterized in that** in the combination step (3) a target function is used that corresponds to the minimum of the sum of squares of the quantum bits (x_ij) of all possible combinations, in particular wherein the target function is

$$\min\left(\sum_i \sum_j x_{ij}(f(a_i, b_j) - KPI)^2\right).$$

4. Manufacturing control method according to any one of the preceding claims, **characterized in that** in the combination step (3) secondary conditions are used which take into account that all components (A_i, B_j) are combined with each other, in particular wherein a first secondary condition is considered, according to which one complementary component (B_j) is assigned to each component (A_i), wherein the first secondary condition with use of a quantum bit (x_ij) is preferably

$$\sum_j (x_{ij}) = 1,$$

and
in particular wherein a second secondary condition considers that a complementary component (A_i) is assigned to each component (B_j), wherein the second secondary condition with use of a quantum bit (x_ij) is preferably

$$\sum_i (x_{ij}) = 1.$$

5. Manufacturing control method according to Claim 4, **characterized in that** in the combination step (3) the secondary conditions are weighted by means of a scaling factor ($\lambda$).

6. Manufacturing control method according to Claims 4 or 5, **characterized in that** in the combination step (3) a sum of the target function and the secondary conditions is used as Quadratic Unconstrained Binary Optimisation (QUBO), in particular wherein the Quadratic Unconstrained Binary Optimization (QUBO) contains the expression

$$\min\left(\sum_i \sum_j x_{ij}(f(a_i,b_j)-KPI)^2\right.$$

$$\left.+ \lambda \left(\sum_i \sum_j \sum_{k>j} x_{ij}x_{ik} + \sum_j \sum_i \sum_{k>i} x_{ij}x_{kj} - \sum_i \sum_j x_{ij}\right)\right)$$

**7.** Manufacturing control method according to Claim 6, **characterized in that** the Quadratic Unconstrained Binary Optimisation (QUBO) is performed by means of the quantum-based computing unit (18).

**8.** Manufacturing control method according to Claim 1, **characterized in that** the selected combinations of the components (A_i, B_j) are transported together as pairs.

**9.** Manufacturing control method according to Claim 1, **characterized in that** the components (A_i, B_j) are furnished with a code that can be identified by the adding unit (15), which code specifies the identifiers of the complementary components (A_i, B_j) of the selected combinations, in particular wherein the code is an RFID tag.

**10.** Control unit for controlling the manufacture of a product, wherein the control unit (10) is configured to execute the method according to Claims 1 to 9.

**Revendications**

**1.** Procédé de commande de la fabrication d'un produit, qui présente au moins deux composants complémentaires (A_i, B_j), dont une quantité (A, B) a été produite lors de processus de production indépendants (1a, 1b) et qui présentent chacun au moins une caractéristique (a_i, b_j) présentant une variation liée à la fabrication,

dans lequel les caractéristiques (a_i, b_j) des composants (A_i, B_j) ont été déterminées par des processus de mesure (2a, 2b) et mémorisées dans un moyen de mémorisation (16) en association avec un identifiant du composant respectif (A_i, B_j) et
dans lequel les composants complémentaires (A_i, B_j) sont combinés à partir des quantités (A, B) lors d'une étape de combinaison (3) basée sur les caractéristiques respectives (a_i, b_j) de telle sorte qu'une combinaison sélectionnée des composants (A_i, B_j) forme respectivement un produit,
**caractérisé en ce que** l'étape de combinaison (3) est effectuée au moins partiellement au moyen d'une unité de calcul quantique (18), dans lequel la combinaison sélectionnée des composants (A_i, B_j) dans leur ensemble se rapprochent le mieux d'une valeur cible,
que l'unité de calcul quantique (18) est un recuit quantique ou une unité de recuit numérique simulant un recuit quantique, en particulier dans lequel l'unité de calcul quantique (18) est séparée spatialement d'une unité de commande (10) prévue pour commander la production et peut communiquer avec celle-ci,
lors de l'étape de combinaison (3), une fonction (f(a_i, b_j)) des caractéristiques (a_i, b_j) des composants (A_i, B_j) est utilisée, qui décrit la relation de complémentarité entre les caractéristiques (a_i, b_j),
que l'étape de combinaison (3) détermine les variances de toutes les combinaisons possibles des composants (A_i, B_j), dans lequel la variance respective correspond à une différence entre le résultat de la fonction (f(a_i, b_j)) et la valeur cible (KPI),
que lors de l'étape de combinaison (3), un bit quantique (x ij) est attribué à chacune des variances de toutes les combinaisons possibles des composants (A i, B_j) sous forme de valeur binaire,
que les composants (A i, B_j) sont transportés vers une unité d'assemblage (15) lors d'une étape de transport (4) et assemblés en le produit correspondant lors d'une étape d'assemblage (5), dans lequel les identifiants des combinaisons sélectionnées des composants (A i, B_j) sont mémorisés dans un ensemble de données lisible par l'unité d'assemblage (15) et l'unité d'assemblage (15) combine un composant avec le composant complémentaire correspondant sélectionné lors de l'étape de combinaison pour former un produit sur la base des identifiants.

**2.** Procédé de commande de production selon la revendication 1, **caractérisé en ce que** la détermination des résultats des fonctions (f(a_i,b_j)) et/ou des variances est effectuée au moyen d'une unité de calcul numérique classique (17).

3. Procédé de commande de production selon la revendication 1, **caractérisé en ce que**, lors de l'étape de combinaison (3), on utilise une fonction objective, qui correspond au minimum de la somme des carrés des bits quantiques (x_ij) de toutes les combinaisons possibles, dans lequel en particulier la fonction objective est

$$\min\left(\sum_i \sum_j x_{ij}(f(a_i,b_j) - KPI)^2\right)$$

4. Procédé de commande de production selon une des revendications précédentes, **caractérisé en ce que**, lors de l'étape de combinaison (3), on utilise des contraintes qui tiennent compte du fait que tous les composants (A_i, B_j) sont combinés les uns avec les autres, dans lequel en particulier une première contrainte tient compte du fait qu'à chaque composant (A_i) est associé un composant complémentaire (B_j) respectif, la première contrainte utilisant un bit quantique (x_ij) est de préférence

$$\sum_j (x_{ij}) = 1$$

et en particulier dans lequel une deuxième contrainte tient compte du fait que chaque composant (B_j) est associé à un composant complémentaire (A_i) respectif, dans lequel la deuxième contrainte utilisant un bit quantique (x_ij) est de préférence

$$\sum_i (x_{ij}) = 1$$

5. Procédé de commande de production selon la revendication 4, **caractérisé en ce que**, lors de l'étape de combinaison (3), les contraintes sont pondérées à l'aide d'un facteur d'échelle (λ).

6. Procédé de commande de production selon les revendications 4 ou 5, **caractérisé en ce que**, lors de l'étape de combinaison (3), une somme de la fonction objective et des contraintes est utilisée comme optimisation binaire quadratique sans contrainte (QUBO), dans lequel en particulier l'optimisation binaire quadratique sans contrainte (QUBO) a pour expression

$$\min\left(\sum_i \sum_j x_{ij}(f(a_i,b_j) - KPI)^2 \right.$$
$$\left. + \lambda\left(\sum\sum\sum x_{ij}x_{ik} + \sum\sum\sum x_{ij}x_{kj} - \sum\sum x_{ij}\right)\right)$$

7. Procédé de commande de production selon la revendication 6, **caractérisé en ce que** l'optimisation binaire quadratique sans contrainte (QUBO) est effectuée à l'aide de l'unité de calcul quantique (18).

8. Procédé de commande de production selon la revendication 1, **caractérisé en ce que** les combinaisons sélectionnées des composants (A_i, B_j) sont conjointement transportées par paires.

9. Procédé de commande de production selon la revendication 1, **caractérisé en ce que** les composants (A_i, B_j) sont dotés d'un identifiant identifiable par l'unité d'assemblage (15), qui indique les identifiants des composants complémentaires (A_i, B_j) des combinaisons sélectionnées, en particulier lorsque l'identifiant est une étiquette RFID.

10. Unité de commande pour le commande de la production d'un produit, dans lequel l'unité de commande (10) est configurée pour mettre en œuvre le procédé selon les revendications 1 à 9.

**Fig. 1**

**Fig. 2**

Fig. 3

**EP 3 859 470 B1**

**IN DER BESCHREIBUNG AUFGEFÜHRTE DOKUMENTE**

**In der Beschreibung aufgeführte Patentdokumente**

- DE 102016121092 A1